# EUROPÄISCHE PATENTSCHRIFT

(11) **EP 3 137 919 B1**
(45) Veröffentlichungstag und Bekanntmachung des Hinweises auf die Patenterteilung: **30.11.2022**
(21) Anmeldenummer: 15723158.0
(22) Anmeldetag: 29.04.2015
(51) Int. Cl.: G01S 15/931, G01S 15/86, G01S 7/52

(54) **VERFAHREN ZUM ERKENNEN EINES BLOCKIERTEN ZUSTANDS EINES ULTRASCHALLSENSORS EINES KRAFTFAHRZEUGS, ULTRASCHALLSENSORVORRICHTUNG UND KRAFTFAHRZEUG**
METHOD FOR DETECTION OF A BLOCKAGE OF AN ULTRASOUND SENSOR OF A VEHICLE, ULTRASOUND SENSOR DEVICE AND VEHICLE
PROCÉDÉ DE DÉTECTION D'UN VERROUILLAGE D'UN CAPTEUR ULTRASON D'UN VÉHICULE, DISPOSITIF DE CAPTEUR ULTRASON ET VÉHICULE

(30) Priorität: 29.04.2014 DE 102014106011
(43) Veröffentlichungstag der Anmeldung: 08.03.2017
(73) Patentinhaber: Valeo Schalter und Sensoren GmbH, 74321 Bietigheim-Bissingen (DE)
(72) Erfinder: ROSTOCKI, Paul-David, 74321 Bietigheim-Bissingen (DE); GÜNZEL, Thorben, 38118 Braunschweig (DE); SCHWARZE, Mario, 84186 Vilsheim (DE)
(74) Vertreter: Enge, Sebastian
(86) Internationale Anmeldenummer: PCT/EP2015/059402
(87) Internationale Veröffentlichungsnummer: WO 2015/165998

(56) Entgegenhaltungen:
- WO-A1-2005/007459
- DE-A1-102010 021 960
- DE-B3-102010 021 053
- US-A1- 2002 023 498
- US-A1- 2009 178 486
- US-A1- 2011 241 858

## Beschreibung

Die Erfindung betrifft ein Verfahren zum Erkennen eines blockierten Zustands eines Ultraschallsensors eines Kraftfahrzeugs, bei welchem ein aktueller Istwert zumindest eines Schwingungsparameters des Ultraschallsensors erfasst und zum Erkennen des blockierten Zustands mittels einer Auswerteeinrichtung mit zumindest einem Grenzwert verglichen wird. Die Erfindung betrifft außerdem eine Ultraschallsensorvorrichtung, welche zum Durchführen eines solchen Verfahrens ausgebildet ist, sowie ein Kraftfahrzeug mit einer derartigen Ultraschallsensorvorrichtung.

Verfahren zum Erkennen eines blockierten Zustands eines Ultraschallsensors sind bereits aus dem Stand der Technik bekannt. Es geht dabei um die Erkennung einer Situation, in welcher der Ultraschallsensor durch eine zusätzliche Masse, etwa durch Schmutz und/oder Schnee und/oder Eis, verdeckt ist. Da Ultraschallsensoren heutzutage immer häufiger auch außerhalb der eigentlichen Parkhilfefunktionalität eingesetzt werden, wie beispielsweise zur Fahrunterstützung mit aktiven Bremseingriffen aufgrund einer detektierten Kollisionsgefahr, soll im Betrieb des Kraftfahrzeugs sichergestellt werden, dass die am Kraftfahrzeug vorhandenen Ultraschallsensoren die in der Umgebung des Kraftfahrzeugs befindlichen Hindernisse sicher erkennen bzw. die Abstände auch zuverlässig bis zu einer vorbestimmten Rechweite erfassen können. Sind die Ultraschallsensoren mit einer zusätzlichen Masse verdeckt, soll dies zuverlässig detektiert werden. Die bekannten Verfahren zur Erkennung von Eis oder Schmutz basieren grundsätzlich auf der Auswertung von Nebeneffekten, welche durch die zusätzliche Masse an dem Ultraschallsensor verursacht werden. So wird durch eine zusätzliche Masse beispielsweise die so genannte Ausschwingzeit der Membran des Ultraschallsensors beeinflusst oder es wird ein virtuelles Echo bzw. ein Scheinecho generiert, was durch entsprechende Auswertung des elektrischen Empfangssignals des Ultraschallsensors detektiert werden kann. Es kann jedoch im ungünstigsten Falle auch vorkommen, dass die zusätzliche Masse weder zu einer Änderung der Ausschwingzeit der Membran führt noch zusätzliche Echos verursacht. In solchen Situationen kann der blockierte Zustand des Ultraschallsensors nicht detektiert werden, und der Sensor ist nicht mehr in der Lage, ein reales Objekt zu detektieren bzw. die Abstände zuverlässig zu erfassen.

Um den blockierten Zustand des Ultraschallsensors auch in solchen ungünstigen Situationen erkennen zu können, wird im Stand der Technik, beispielsweise in der US2009/0178486 A1 bereits ein Verfahren vorgeschlagen, bei welchem eine Plausibilisierung dahingehend vorgenommen wird, dass der Ultraschallsensor in einen Überprüfungsmodus geschaltet wird, in welchem die Empfindlichkeit des Ultraschallsensors im Vergleich zum Normalbetrieb deutlich erhöht wird. In diesem Überprüfungsmodus wird überprüft, ob der Ultraschallsensor so genannte Bodenreflexionen oder Reflexionen an anderen Objekten empfangen kann, welche im Normalbetrieb üblicherweise aufgrund der geringeren Empfindlichkeit ausgeblendet werden. Der Nachteil eines solchen Überprüfungsmodus besteht jedoch darin, dass der Ultraschallsensor für eine bestimmte Zeitdauer für die eigentlichen Messungen nicht zur Verfügung steht und es somit zu einer zeitlichen Verzögerung der Verfügbarkeit des Sensors kommt.

Eine gewisse Abhilfe schafft hier ein alternatives Verfahren, wie es in dem Dokument DE 102 47 971 A1 beschrieben ist. Es wird hier die Eigenfrequenz bzw. Resonanzfrequenz des Ultraschallsensors gemessen und mit abgelegten Referenzwerten verglichen. Dieses Verfahren basiert auf der Tatsache, dass die Resonanzfrequenz des Ultraschallsensors ein direkter Indikator für eine Verschmutzung, Eis- oder Schneeschicht ist, da diese zusätzliche Schicht die Masse der harmonischen Schwingung beeinflusst. Mit der zusätzlichen Masse der Verschmutzung bzw. der Eis- oder Schneeschicht ändert sich nämlich auch die schwingende Masse und folglich auch die Resonanzfrequenz des Sensors.

Um einen mit Schmutz und/oder Eis und/oder Schnee verdeckten Zustand eines Ultraschallsensors erkennen zu können, schlägt die DE 10 2009 040 992 A1 vor, die Ausschwingfrequenz des Ultraschallsensors im Anschluss an eine Anregung der Membran zu erfassen und mit der Anregefrequenz zu vergleichen. Abhängig von dem Ergebnis dieses Vergleichs wird festgestellt, ob der Ultraschallsensor blockiert ist oder nicht.

Weiterhin beschreibt die DE 10 2010 021 960 A1 ein Verfahren, bei welchem zur Erkennung des blockierten Zustands eines Ultraschallsensors die Ausschwingzeit der Membran über mehrere Messzyklen des Ultraschallsensors hinweg ausgewertet wird.

Eine weitere Plausibilisierung kann im Stand der Technik gemäß DE 101 42 075 A1 sowie DE 10 2010 021 960 A1 darin bestehen, dass der Algorithmus zur Überprüfung des blockierten Zustands des Ultraschallsensors erst dann ausgeführt wird, wenn die Umgebungstemperatur kleiner als ein vorbestimmter Schwellwert ist, bei welchem normalerweise mit einem Schneefall gerechnet werden kann. Auch in der DE 101 21 519 B4 wird vorgeschlagen, die Außenlufttemperatur zu überwachen, welche auf der Grundlage der durch den Ultraschallsensor selbst gemessenen Abstandswerte berechnet wird.

Das akustische Verhalten von Ultraschallsensoren und somit die Schwingungsparameter, wie beispielsweise die Ausschwingzeit und/oder die Resonanzfrequenz, verändern sich unterschiedlich je nach verwendetem Material des Verkleidungsteils (Stoßfänger), insbesondere abhängig von der Dicke, Dichte, dem E-Modul und dergleichen. Die verwendeten sensorspezifischen Schwingungsparameter des akustischen Verhaltens der Ultraschallsensoren verändern sich außerdem nicht nur aufgrund einer zusätzlichen Masse - wie Schnee oder Eis - auf der Membran. Bei vollständig gereinigten Sensoren kann sich das akustische Verhalten auch aufgrund von nahen Objekten in entsprechender Weise verändern. Im Stand der Technik muss daher bei der Entwicklung der Algorithmen zur Erkennung der Sensorblindheit ein Kompromiss zwischen Steigerung der Erkennungsrate einerseits und Vermeidung von Fehldetektionen andererseits getroffen werden.

Aus der US 2002/0023498 A1 ist ein Hinderniserkennungssystem für Fahrzeuge mit Ultraschallsensoren bekannt. Wenn die Temperatur in der Umgebung des Ultraschallsensors unter einen vorbestimmten Schwellwert fällt, der zu Schneefall gehört, wird ein Verhältnis zwischen der aktuellen Ausschwingzeit zu einer vorbestimmten Ausschwingzeit bestimmt, und abhängig von diesem Verhältnis ein Warnsignal ausgesendet, wenn Schnee auf dem Sensor ist.

Die WO 2005/007459 A1 beschreibt eine Sicherheitsvorrichtung für Kraftfahrzeuge mit Sensoren zur Hinderniserkennung, wobei weitere Sensoren zur Bestimmung von Umwelteinflüssen vorgesehen sind, welche die Sensoren zur Hinderniserkennung beeinflussen könnten.

Aus der US2011/0241858 A1 ist eine Objekterkennungseinrichtung bekannt, bei welcher die Ausschwingzeit des Ultraschallsensors genutzt wird, um eine Blockierung des Sensors durch Schnee zu erkennen. Als zusätzliche Sicherheit wird der Wetterbericht am Ort des Fahrzeugs abgefragt, um zu überprüfen, ob eine Blockierung durch Schnee überhaupt möglich ist.

Es ist Aufgabe der Erfindung, eine Lösung aufzuzeigen, wie bei einem Verfahren der eingangs genannten Gattung der blockierte Zustand des Ultraschallsensors besonders zuverlässig detektiert werden kann.

Diese Aufgabe wird erfindungsgemäß durch ein Verfahren, durch eine Ultraschallsensorvorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Erkennen eines blockierten Zustands eines Ultraschallsensors eines Kraftfahrzeugs. Unter dem blockierten Zustand wird dabei ein durch eine zusätzliche Masse verdeckter Zustand verstanden, wie insbesondere ein durch Eis und/oder Schnee und/oder Schmutz verdeckter Zustand des Ultraschallsensors, bei welchem die zusätzliche Masse als Belag an der Membran des Ultraschallsensors anhaftet. Es wird ein Istwert zumindest eines Schwingungsparameters des Ultraschallsensors erfasst, wie beispielsweise der Istwert einer Resonanzfrequenz und/oder der Istwert einer Ausschwingzeit. Der Istwert des Schwingungsparameters wird dann mittels einer elektronischen Auswerteeinrichtung mit einem Grenzwert verglichen, und abhängig von diesem Vergleich wird überprüft, ob der Ultraschallsensor aktuell blockiert ist oder nicht. Erfindungsgemäß ist vorgesehen, dass abhängig von einer Messgröße zumindest eines von dem Ultraschallsensor verschiedenen Sensors des Kraftfahrzeugs - der insbesondere kein Ultraschallsensor ist - ein Wahrscheinlichkeitswert durch die Auswerteeinrichtung berechnet wird, welcher die aktuelle Wahrscheinlichkeit für den blockierten Zustand des Ultraschallsensors angibt, und das Detektieren des blockierten Zustands zusätzlich zu dem oben genannten Vergleich auch unter Berücksichtigung des Wahrscheinlichkeitswerts erfolgt.

Die Erfindung basiert auf der Erkenntnis, dass der blockierte Zustand eines Ultraschallsensors durch Auswertung eines Schwingungsparameters grundsätzlich zuverlässig detektiert werden kann und insbesondere die Resonanzfrequenz und/oder Ausschwingzeit des Sensors ein zuverlässiges Maß für eine zusätzliche Masse an der Membran darstellt, dass jedoch im Stand der Technik die Auswertung der Resonanzfrequenz in manchen Situationen lediglich zu unzureichenden Ergebnissen führt. Eine weitere Erkenntnis besteht darin, dass die unzureichenden Ergebnisse darauf zurückzuführen sind, dass es auch zusätzliche Faktoren gibt, welche die Resonanzfrequenz, die Ausschwingzeit und andere Schwingungsparameter des Ultraschallsensors beeinflussen. Um auch bei derartigen Veränderungen des Schwingungsparameters durch andere Faktoren den blockierten Zustand des Ultraschallsensors zuverlässig und fehlerfrei detektieren zu können, wird auf Basis von weiteren Parametern anderer Sensoren bzw. auf Basis zumindest einer Messgröße eines von dem Ultraschallsensor verschiedenen Sensors des Kraftfahrzeugs - dieser ist insbesondere kein Ultraschallsensor - explizit ein Wahrscheinlichkeitswert berechnet, anhand dessen Situationen erkannt werden können, in denen es wahrscheinlich ist, dass sich störende Materialbeläge auf dem Ultraschallsensor ablagern und so zur Blindheit des Ultraschallsensors führen können. Ein derartiger Wahrscheinlichkeitswert kann insbesondere abhängig von zumindest zwei, insbesondere abhängig von zumindest drei, unterschiedlichen Messgrößen berechnet werden und stellt somit eine zuverlässige Grundlage für die Erkennung von Situationen dar, in denen eine "Blindheit" des Ultraschallsensors sehr wahrscheinlich ist. Da der Erkennung des blockierten Zustands sowohl der zumindest eine Schwingungsparameter als auch der berechnete Wahrscheinlichkeitswert zugrunde gelegt werden, kann die Detektion des blockierten Zustands somit besonders zuverlässig und fehlerfrei erfolgen. Einerseits können somit Fehldetektionen verhindert werden; andererseits kann eine Steigerung der Erkennungsrate erreicht werden.

Bei dem Ultraschallsensor kann es sich einerseits um einen Sensor handeln, dessen Membran in einer durchgängigen Aussparung eines Verkleidungsteils, beispielsweise eines Stoßfängers, des Kraftfahrzeugs angeordnet ist und somit von außerhalb des Kraftfahrzeugs sichtbar ist. Zum anderen kann alternativ auch vorgesehen sein, dass der Ultraschallsensor an einer Rückseite des Verkleidungsteils so angeordnet ist, dass die Membran an der Rückseite des Verkleidungsteils anliegt und die Ultraschallsignale durch das Material des Verkleidungsteils hindurch aussendet und empfängt. Gerade bei einer solchen verdeckten und von außen unsichtbaren Anordnung des Ultraschallsensors an dem Verkleidungsteil ist die Veränderung der Schwingungsparameter bzw. der Schwingungseigenschaften des Ultraschallsensors aufgrund der Temperaturabhängigkeit der Materialsteifigkeit besonders signifikant.

Die Auswerteeinrichtung ist bevorzugt ein zentrales Steuergerät, mittels welchem mehrere Ultraschallsensoren des Kraftfahrzeugs angesteuert werden. Dieses Steuergerät kann beispielsweise zur Ansteuerung einer Gruppe von Ultraschallsensoren dienen, welche an einem Stoßfänger angeordnet sind. Es kann sich aber auch um ein Steuergerät handeln, welches gemeinsam für alle Ultraschallsensoren ist, welche am vorderen und am hinteren Stoßfänger angeordnet sind.

Bei der Erkennung des blockierten Zustands werden also gleichzeitig der zumindest eine Schwingungsparameter einerseits sowie der Wahrscheinlichkeitswert andererseits berücksichtigt. Diesbezüglich können verschiedene Ausführungsformen vorgesehen sein:
Das Berücksichtigen des Wahrscheinlichkeitswerts bei der Erkennung des blockierten Zustands beinhaltet erfindungsgemäß, dass der oben genannte Grenzwert, mit welchem der aktuelle Istwert des Schwingungsparameters verglichen wird, in Abhängigkeit von dem Wahrscheinlichkeitswert im Betrieb des Kraftfahrzeugs festgelegt bzw. eingestellt wird. Auf diese Art und Weise kann der Grenzwert situationsabhängig und bedarfsgerecht in Abhängigkeit von der jeweils aktuellen Situation eingestellt werden, und der blockierte Zustand des Ultraschallsensors kann somit besonders zuverlässig erkannt werden.

Erfindungsgemäß ist vorgesehen, dass der Grenzwert derart in Abhängigkeit von dem Wahrscheinlichkeitswert festgelegt bzw. eingestellt wird, dass eine Differenz zwischen dem Grenzwert für den Schwingungsparameter einerseits und einem Nominalwert bzw. Normalwert des Schwingungsparameters andererseits bei einem höheren Wahrscheinlichkeitswert geringer als bei einem geringeren Wahrscheinlichkeitswert eingestellt wird. Dadurch ist diese Differenz beispielsweise umgekehrt proportional zur Wahrscheinlichkeit. Unter dem Nominalwert des Schwingungsparameters wird dabei derjenige Wert verstanden, der sich im Normalbetrieb des Ultraschallsensors und somit bei einem nicht-blockierten Ultraschallsensor einstellt. Mit anderen Worten wird bei dieser Ausführungsform der auf dem Vergleich des Istwerts des Schwingungsparameters mit dem Grenzwert basierende Detektionsalgorithmus bei höherem Wahrscheinlichkeitswert sensibler bzw. empfindlicher eingestellt. Es gilt dabei die Beziehung, dass, je größer der Wahrscheinlichkeitswert ist, desto sensibler bzw. empfindlicher dieser Detektionsalgorithmus auf Basis des Schwingungsparameters ist. Der Grenzwert für den zumindest einen Schwingungsparameter kann somit derart optimal bzw. bedarfsgerecht eingestellt werden, dass die Erkennungsrate maximiert und die Fehldetektionsrate minimiert wird.

Es erweist sich als vorteilhaft, wenn der Wahrscheinlichkeitswert mit zumindest einem vorbestimmten Schwellwert, insbesondere mit einem ersten Schwellwert und einem höheren zweiten Schwellwert, verglichen wird und das Berücksichtigen des Wahrscheinlichkeitswerts abhängig von einem Ergebnis dieses Vergleichs erfolgt. Diese Ausführungsform kann ohne viel Aufwand implementiert werden.

Insbesondere ist vorgesehen, dass die oben genannte Differenz zwischen dem Grenzwert einerseits und dem Nominalwert des Schwingungsparameters andererseits dann von einem ersten Differenzwert auf einen geringeren zweiten Differenzwert reduziert und der Detektionsalgorithmus bezüglich des zumindest einen Schwingungsparameters dann empfindlicher eingestellt wird, wenn der Wahrscheinlichkeitswert den ersten Schwellwert überschreitet. Dieser erste Schwellwert kann beispielsweise in einem Wertebereich von 20% bis 70% liegen. Wird eine solche Wahrscheinlichkeit für den blockierten Zustand detektiert, so wird der Detektionsalgorithmus sensibler bzw. die Differenz zwischen dem Grenzwert und dem Nominalwert auf den geringeren zweiten Wert eingestellt. Eine zusätzliche Masse auf der Membran des Ultraschallsensors kann dann zuverlässig und frühzeitig detektiert werden.

Der blockierte Zustand des Ultraschallsensors wird vorzugsweise dann detektiert und beispielsweise ein entsprechendes Warnsignal dann ausgegeben, wenn der Wahrscheinlichkeitswert den höheren zweiten Schwellwert überschreitet und/oder der Istwert des zumindest einen Schwingungsparameters den zugeordneten Grenzwert erreicht. Gemäß einer ersten Alternative wird der blockierte Zustand also bereits dann detektiert und beispielsweise das Warnsignal ausgegeben, wenn beide Voraussetzungen erfüllt sind, d.h. wenn der Wahrscheinlichkeitswert den zweiten Schwellwert überschreitet und zusätzlich der Istwert des zumindest einen Schwingungsparameters den Grenzwert erreicht. Gemäß einer weiteren Alternative ist es für die Detektion des blockierten Zustands und insbesondere für die Ausgabe des Warnsignals ausreichend, wenn der Wahrscheinlichkeitswert den zweiten Schwellwert überschreitet. Eine noch weitere Alternative sieht vor, dass es für die Detektion des blockierten Zustands und insbesondere die Ausgabe des Warnsignals ausreichend ist, wenn der Istwert des zumindest einen Schwingungsparameters den - gegebenenfalls bereits adaptierten - Grenzwert erreicht. Alle Ausführungsformen sorgen für eine zuverlässige und fehlerfreie Erkennung des blockierten Zustands bzw. einer "Blindheit" des Ultraschallsensors.

Hinsichtlich der Berechnung des Wahrscheinlichkeitswerts können verschiedenste Ausführungsformen vorgesehen sein:
In einer Ausführungsform kann der Wahrscheinlichkeitswert abhängig von zumindest einer Messgröße bestimmt werden, welche aktuelle atmosphärische Umgebungsbedingungen des Kraftfahrzeugs charakterisiert. Insbesondere kann dabei eine aktuelle Umgebungstemperatur und/oder die Detektion eines Schneefalls und/oder eines Regens berücksichtigt werden. Zur Detektion des Schneefalls und/oder Regens kann beispielsweise ein Regen- und/oder Schneesensor verwendet werden. Ergänzend oder alternativ kann diese Detektion abhängig von der Betätigung einer Scheibenwisch- und/oder -reinigungsanlage des Kraftfahrzeugs erfolgen. Weiterhin ergänzend oder alternativ kann der Schneefall und/oder Regen anhand von Bilddaten einer Kamera des Kraftfahrzeugs detektiert werden. Weiterhin ergänzend oder alternativ kann diese Detektion derart erfolgen, dass von der Auswerteeinrichtung an einen Internetserver die aktuelle geographische Position übermittelt wird und der Internetserver dann an die Auswerteeinrichtung des Kraftfahrzeugs Daten übermittelt, welche Informationen über die aktuellen atmosphärischen Umgebungsbedingungen in der Umgebung des Kraftfahrzeugs beinhalten, insbesondere über die aktuelle Umgebungstemperatur und/oder über einen Schneefall und/oder Regen. Der Wahrscheinlichkeitswert kann somit besonders realitätsgetreu ermittelt werden, da die aktuellen atmosphärischen Umgebungsbedingungen einen sehr großen Einfluss auf die Wahrscheinlichkeit des blockierten Zustands des Ultraschallsensors haben. Wird nämlich eine Fahrt bei Schneefall detektiert, so kann mit hoher Wahrscheinlichkeit davon ausgegangen werden, dass sich Neuschnee am vorderen Stoßfänger des Kraftfahrzeugs ablagern kann.

Ergänzend oder alternativ kann der Wahrscheinlichkeitswert abhängig von einer aktuellen Geschwindigkeit des Kraftfahrzeugs als Messgröße bestimmt werden. So führt beispielsweise eine Fahrt mit einer relativ großen Geschwindigkeit auf einer schneebedeckten Fahrbahn zu einer Aufwirbelung von Schnee am Heck des Kraftfahrzeugs und somit zur Bildung einer so genannten "Schneeschleppe", wodurch sich Schnee am hinteren Stoßfänger ablagern kann. Eine solche Situation führt sehr wahrscheinlich zu einer zusätzlichen Masse und somit einer möglichen "Blindheit" des Ultraschallsensors. Je höher die Geschwindigkeit ist, desto höher kann auch der Wahrscheinlichkeitswert sein.

Weiterhin ergänzend oder alternativ kann der Wahrscheinlichkeitswert abhängig von einer durch das Kraftfahrzeug seit einem Referenzzeitpunkt - beispielsweise seit Beginn einer Fahrt - zurückgelegten Wegstrecke als Messgröße bestimmt werden. So wurde bei Messungen in Schweden beobachtet, dass abhängig von der Außentemperatur und Luftfeuchtigkeit unterschiedliche Fahrstrecken notwendig sind, um eine für den blockierten Zustand des Ultraschallsensors notwendige Schichtdicke des Belags (Schnee) auf dem Stoßfänger zu erreichen. Je größer die zurückgelegte Wegstrecke ist, desto höher ist auch die Wahrscheinlichkeit für den blockierten Zustand des Ultraschallsensors. Der Wahrscheinlichkeitswert kann somit besonders präzise berechnet werden.

Weiterhin ergänzend oder alternativ kann der Wahrscheinlichkeitswert abhängig von einem Zustand einer Fahrbahn als Messgröße bestimmt werden. Dieser Zustand kann insbesondere anhand zumindest eines durch eine Kamera des Kraftfahrzeugs bereitgestellten Bilds eines Umgebungsbereichs des Kraftfahrzeugs ermittelt werden. Insbesondere wird dabei überprüft, ob die Fahrbahn mit Schnee bedeckt ist oder nicht. Wie bereits ausgeführt, kann nämlich eine längere Fahrt auf einer mit Schnee bedeckten Fahrbahn zu einer Aufwirbelung von Schnee am Fahrzeugheck und somit zur Bildung der "Schneeschleppe" führen. Dies wiederum führt zur Ablagerung von Schnee am Heckstoßfänger.

Weiterhin ergänzend oder alternativ kann der Wahrscheinlichkeitswert auch abhängig von einem Abstand des Kraftfahrzeugs von einem benachbarten Fahrzeug bestimmt wer den, insbesondere von einem vorausfahrenden Fahrzeug. Dieser Abstand kann insbesondere mittels eines von dem Ultraschallsensor verschiedenen Abstandssensors gemessen werden, wie insbesondere mittels eines Radarsensors und/oder eines Lidarsensors und/oder einer Kamera. Es hat sich nämlich herausgestellt, dass eine Folgefahrt hinter einem anderen Fahrzeug in einem relativ kleinen Abstand auf schneebedeckter Fahrbahn bei einer relativ hohen Geschwindigkeit zur Ablagerung von Schnee am vorderen Stoßfänger führt und somit die Wahrscheinlichkeit des blockierten Zustands des Ultraschallsensors erhöht. Ist der Abstand zum vorausfahrenden Fahrzeug kleiner als ein vorgegebener Schwellwert, so kann dies zu einer Erhöhung des Wahrscheinlichkeitswerts führen.

Weiterhin ergänzend oder alternativ kann der Wahrscheinlichkeitswert abhängig von einer aktuellen geographischen Position des Kraftfahrzeugs als Messgröße bestimmt werden. So ist die Wahrscheinlichkeit für den blockierten Zustand in manchen Ländern, wie beispielsweise in Norwegen oder Schweden, deutlich größer als in Ländern, in denen ein Schneefall deutlich weniger wahrscheinlich ist. Die aktuelle geographische Position des Kraftfahrzeugs kann dabei mithilfe eines entsprechenden Navigationsempfängers - beispielsweise GPS - erfasst werden.

Weiterhin ergänzend oder alternativ kann der Wahrscheinlichkeitswert auch abhängig von der Position des Ultraschallsensors am Kraftfahrzeug bestimmt werden, insbesondere abhängig davon, ob der Ultraschallsensor an einer Fahrzeugfront oder am Fahrzeugheck angeordnet ist. Eine solche individuelle Bestimmung des Wahrscheinlichkeitswerts beruht darauf, dass abhängig von dem jeweils gegebenen Szenario die Wahrscheinlichkeit für eine Schneeschicht am vorderen und hinteren Stoßfänger unterschiedlich sein kann. So ist beispielsweise bei einer relativ schnellen Fahrt auf schneebedeckter Fahrbahn und ohne Schneefall wahrscheinlicher, dass die Ultraschallsensoren am Heck durch eine Schneeschicht bedeckt werden. Demgegenüber ist bei einer Folgefahrt hinter einem Fahrzeug wahrscheinlicher, dass die Ultraschallsensoren am vorderen Stoßfänger blockiert werden.

Weiterhin ergänzend oder alternativ kann der Wahrscheinlichkeitswert auch unter Berücksichtigung der aktuellen Jahreszeit bestimmt werden. Eine Schnee- und/oder Eisschicht am Ultraschallsensor ist nämlich im Sommer weniger wahrscheinlich als im Winter, was bei der Berechnung des Wahrscheinlichkeitswerts entsprechend berücksichtigt werden kann.

Zur Berechnung des Wahrscheinlichkeitswerts kann beispielsweise eine Wahrscheinlichkeitsfunktion verwendet werden, welche auf einem Bayes'schen Netz basiert. Die Wahrscheinlichkeitsfunktion kann dabei implizit mit Trainingsdaten oder aber empirisch explizit bestimmt werden.

Die Erfindung betrifft außerdem eine Ultraschallsensorvorrichtung für ein Kraftfahrzeug, welche zum Durchführen eines erfindungsgemäßen Verfahrens ausgebildet ist.

Ein erfindungsgemäßes Kraftfahrzeug, insbesondere ein Personenkraftwagen, umfasst eine erfindungsgemäße Ultraschallsensorvorrichtung.

Die mit Bezug auf das erfindungsgemäße Verfahren vorgestellten bevorzugten Ausführungsformen und deren Vorteile gelten entsprechend für die erfindungsgemäße Ultraschallsensorvorrichtung sowie für das erfindungsgemäße Kraftfahrzeug.

Die Erfindung wird nachfolgend anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensorvorrichtung gemäß einer Ausführungsform der Erfindung; und
- Fig. 2: ein Flussdiagramm eines Verfahrens gemäß einer Ausführungsform der Erfindung.

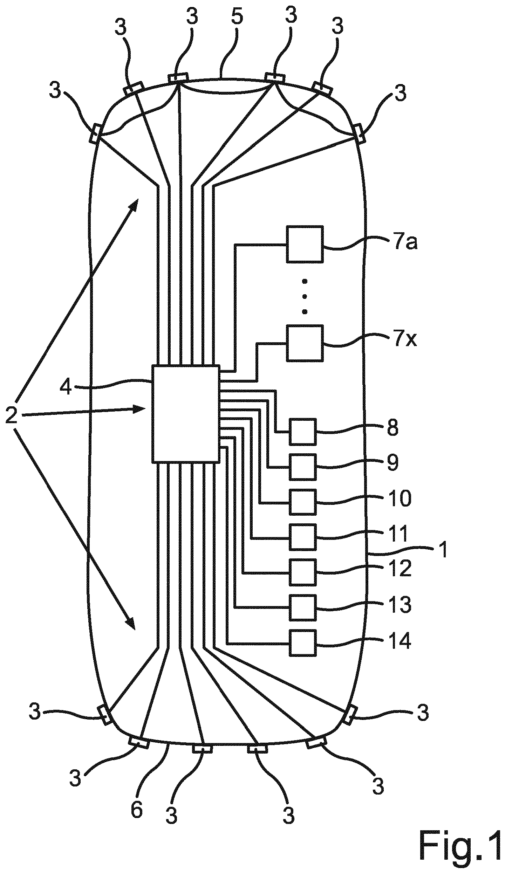

Ein in Fig. 1 dargestelltes Kraftfahrzeug 1 ist beispielsweise ein Personenkraftwagen. Das Kraftfahrzeug 1 umfasst eine Ultraschallsensorvorrichtung 2, welche eine Vielzahl von Ultraschallsensoren 3 sowie eine elektronische Auswerteeinrichtung 4 beispielsweise in Form eines Steuergeräts aufweist. Die Anzahl und die Anordnung der Ultraschallsensoren 3 sind in Fig. 1 lediglich beispielhaft dargestellt und können je nach Ausführungsform variieren. Im Ausführungsbeispiel sind eine Vielzahl von Ultraschallsensoren 3 an einem vorderen Stoßfänger 5 des Kraftfahrzeugs 1 angeordnet; eine Vielzahl von Ultraschallsensoren 3 sind auch an einem hinteren Stoßfänger 6 des Kraftfahrzeugs 1 angeordnet. Hinsichtlich der Einbauart der Ultraschallsensoren 3 können zwei alternative Ausführungsformen vorgesehen sein. Zum einen können die Ultraschallsensoren 3 jeweils in einer Aussparung des jeweiligen Stoßfängers 5, 6 angeordnet sein, sodass die Membranen der jeweiligen Ultraschallsensoren 3 innerhalb der jeweiligen durchgängigen Aussparung des Stoßfängers 5, 6 angeordnet sind. Zum anderen kann jedoch auch ein verdeckter Einbau der Ultraschallsensoren 3 hinter dem jeweiligen Stoßfänger 5, 6 vorgesehen sein, sodass die Membranen der Ultraschallsensoren 3 an der Rückseite des jeweiligen Stoßfängers 5, 6 anliegen und die Ultraschallsignale durch das Material des Stoßfängers 5, 6 hindurch aussenden und empfangen.

Die Ultraschallsensoren 3 sind jeweils zum Erfassen von Abständen zu in einer Umgebung des Kraftfahrzeugs 1 befindlichen Hindernissen ausgebildet. Die jeweils gemessenen Abstandswerte werden von den Ultraschallsensoren 3 an die zentrale Auswerteeinrichtung 4 übermittelt, welche die Messwerte der Ultraschallsensoren 3 verarbeitet. In dem Kraftfahrzeug 1 können mehrere Fahrerassistenzsysteme 7a bis 7x vorgesehen sein, welche zum Bereitstellen unterschiedlicher Funktionalitäten in dem Kraftfahrzeug 1 ausgebildet sind, und zwar anhand der gemessenen Abstände der Ultraschallsensoren 3. In Fig. 1 sind die unterschiedlichen Fahrerassistenzsysteme 7a bis 7x als separate Komponenten gezeigt; mehrere Funktionalitäten können aber auch durch ein gemeinsames Steuergerät bereitgestellt werden, welches dann die Funktion mehrerer Fahrerassistenzsysteme übernimmt. Als Fahrerassistenzsysteme 7a bis 7x können beispielsweise folgende Systeme vorgesehen sein: ein Parkhilfesystem, bei welchem die gemessenen Abstände akustisch und/oder optisch ausgegeben werden, ein automatisches Parkassistenzsystem zum automatischen Einparken, ein automatisches Bremsassistenzsystem, welches zum autonomen Bremsen des Kraftfahrzeugs 1 aufgrund einer anhand der Messwerte der Ultraschallsensoren 3 detektierten Kollisionsgefahr dient, ein System zur Totwinkelüberwachung, ein System zur Abstandshaltung, ein Kollisionserkennungssystem und dergleichen.

Die Auswerteeinrichtung 4 kann auch zu jedem Ultraschallsensor 3 separat überprüfen, ob dieser Ultraschallsensor 3 durch eine zusätzliche Masse, wie eine Verschmutzung und/oder Eis und/oder Schnee, verdeckt und somit blockiert und bei der Bereitstellung seiner Funktion verhindert ist. Zu diesem Zwecke wird bei jedem Ultraschallsensor 3 der aktuelle Istwert zumindest eines Schwingungsparameters erfasst, welcher das akustische Verhalten des jeweiligen Ultraschallsensors 3 beschreibt. Der Istwert des zumindest einen Schwingungsparameters wird von dem jeweiligen Ultraschallsensor 3 an die Auswerteeinrichtung 4 übermittelt. Als Schwingungsparameter kann dabei beispielsweise die jeweilige Resonanzfrequenz und/oder die jeweilige Ausschwingzeit erfasst werden. Es handelt sich bei der Resonanzfrequenz um die Eigenfrequenz der jeweiligen Membran, welche abhängig von der tatsächlichen Schwingungsmasse variiert und unmittelbar nach einem Anregen der Membran gemessen wird, d.h. beim Ausschwingen der Membran. Die Resonanzfrequenz ist also eine Ausschwingfrequenz. Die Ausschwingzeit bezeichnet hingegen eine Zeitdauer, für welche die jeweilige Membran nach dem Anregen durch ein entsprechendes Piezoelement noch in Schwingung bleibt.

Für jeden Ultraschallsensor 3 wird dann in der Auswerteeinrichtung 4 ein Detektionsalgorithmus ausgeführt, bei welchem der aktuelle Istwert des zumindest einen Schwingungsparameters des jeweiligen Ultraschallsensors mit einem abgelegten Grenzwert verglichen wird. Dabei kann ein solcher Grenzwert sowohl nach oben als auch nach unten definiert werden. Wird durch die Auswerteeinrichtung 4 detektiert, dass der Istwert des Schwingungsparameters den zugeordneten Grenzwert passiert (überschreitet bzw. unterschreitet), kann die Auswerteeinrichtung 4 dies dahingehend interpretieren, dass der Ultraschallsensor 3 durch eine zusätzliche Masse in seiner Funktionalität blockiert ist.

Darüber hinaus ist die Auswerteeinrichtung 4 mit einer Vielzahl von Sensoren des Kraftfahrzeugs 1 gekoppelt: mit einem Regen- und/oder Schneesensor 8 und/oder mit einem Außentemperatursensor 9 und/oder mit einem Geschwindigkeitssensor 10 und/oder einem Wegsensor 11 und/oder mit einer Kamera 12 und/oder zumindest einem Abstandssensor 13 und/oder einem Navigationsempfänger 14. Der Regen- und/oder Schneesensor 8 dient zur Detektion von Regen und/oder eines Schneefalls in der Umgebung des Kraftfahrzeugs 1. Der Außentemperatursensor 9 dient zur Erfassung der Umgebungstemperatur des Kraftfahrzeugs 1, d.h. der Lufttemperatur in der Umgebung des Kraftfahrzeugs 1. Der Geschwindigkeitssensor 10 misst die aktuelle Geschwindigkeit des Kraftfahrzeugs 1. Der Wegsensor 11 erfasst die durch das Kraftfahrzeug 1 zurückgelegte Wegstrecke. Die Kamera 12 (zum Beispiel eine Frontkamera) stellt Bilder der Umgebung des Kraftfahrzeugs 1 bereit. Der Abstandssensor 13 ist vorzugsweise ein von den Ultraschallsensoren 3 separater Abstandssensor, welcher Abstände zu einem benachbarten Fahrzeug erfasst, insbesondere einem vorausfahrenden Fahrzeug. Der zumindest eine Abstandssensor 13 kann beispielsweise einen Radarsensor und/oder einen Lidar-Sensor und/oder eine Kamera beinhalten. Der Navigationsempfänger 14 ist beispielsweise ein GPS-Empfänger und stellt Positionsdaten bereit, welche die aktuelle geographische Position des Kraftfahrzeugs 1 charakterisieren.

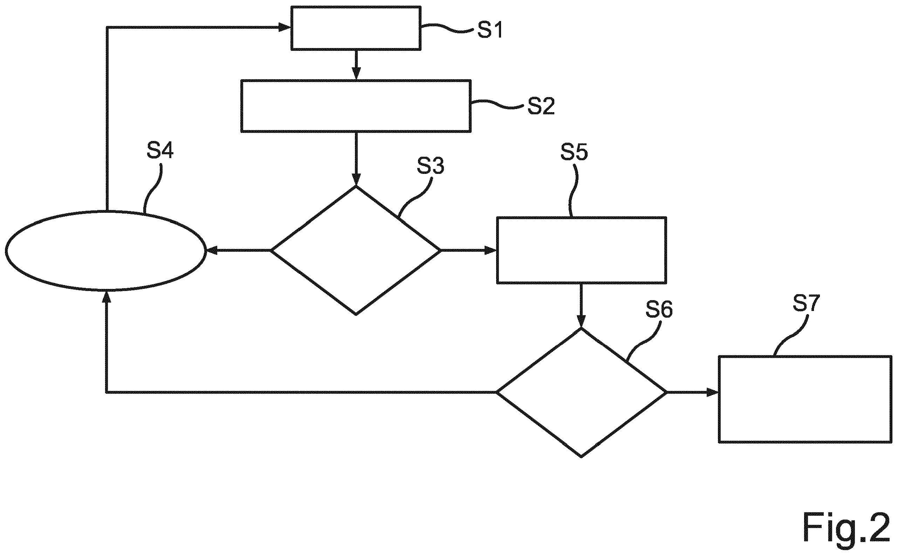

Zusätzlich zu dem oben genannten Detektionsalgorithmus berechnet die Auswerteeinrichtung 4 anhand von Messgrößen der Sensoren 8 bis 14 einen Wahrscheinlichkeitswert, welcher die aktuelle Wahrscheinlichkeit für den blockierten Zustand der Ultraschallsensoren 3 angibt. Ein diesbezügliches Verfahren wird nachfolgend unter Bezugnahme auf Fig. 2 näher erläutert:
Das Verfahren startet in Schritt S1, in welchem folgende Messgrößen durch die Auswerteeinrichtung 4 eingelesen werden:
- die Messgröße von dem Regen- und/oder Schneesensor 8, welche angibt, ob es regnet bzw. schneit oder nicht, und/oder
- die Umgebungstemperatur von dem Außentemperatursensor 9 und/oder
- die aktuelle Geschwindigkeit des Kraftfahrzeugs 1 von dem Geschwindigkeitssensor 10 und/oder
- eine seit einem Referenzzeitpunkt - insbesondere seit Beginn der Fahrt - zurückgelegte Wegstrecke von dem Wegsensor 11 und/oder
- die Bilddaten von der Kamera 12 - anhand dieser Bilddaten kann der aktuelle Zustand der Fahrbahn erfasst werden, d.h. ob die Fahrbahn beispielsweise mit Schnee bedeckt ist, und/oder
- ein Abstand zum vorausfahrenden und/oder zum hinterherfahrenden Fahrzeug - diese Messgrößen werden von dem zumindest einen Abstandssensor 13 eingelesen, und/oder
- die aktuelle Position des Kraftfahrzeugs 1 von dem Navigationsempfänger 14 und/oder
- eine Häufigkeit der Betätigung eines Scheibenwischers und/oder einer Scheibenreinigungsanlage des Kraftfahrzeugs 1.

Das Verfahren geht dann zu einem weiteren Schritt S2 über, in welchem die Auswerteeinrichtung 4 einen Wahrscheinlichkeitswert W berechnet, der die oben genannte Wahrscheinlichkeit für den blockierten Zustand der Ultraschallsensoren 3 angibt. Bei der Berechnung des Wahrscheinlichkeitswerts W werden die oben genannten Messgrößen in einer beliebigen Kombination berücksichtigt. Optional können die Messgrößen auch gewichtet werden. Werden beispielsweise folgende Messgrößen erfasst:
- Umgebungstemperatur: -10°C,
- Fahrstrecke von 50 km mit einer Durchschnittsgeschwindigkeit größer 60 km/h,
- aktuelles Wetter laut Wetterbericht für den Ort oder die Route: Schneefall - beispielsweise über einen entsprechenden Internetserver abhängig von der aktuellen geographischen Position des Kraftfahrzeugs 1 erfasst,
- Wischeraktivität: hohes Intervall,
- Informationen des zumindest einen Abstandssensors 13 (z.B. ACC-Radar): keine Folgefahrt bzw. kein vorausfahrendes Fahrzeug,
- Kamera 12: schneebedeckte Fahrbahn,
dann besteht eine sehr hohe Wahrscheinlichkeit für eine Blindheit der Ultraschallsensoren 3 am hinteren Stoßfänger 6. Der Wahrscheinlichkeitswert W ist dann entsprechend hoch und beispielsweise größer als 60%.

Würde der zumindest eine Abstandssensor 13 zusätzlich noch eine Folgefahrt hinter einem Fahrzeug detektieren, so wäre auch die Wahrscheinlichkeit relativ hoch, dass die Ultraschallsensoren 3 am vorderen Stoßfänger 6 blockiert sind.

In einem weiteren Schritt S3 überprüft die Auswerteeinrichtung 4, ob der aktuelle Wahrscheinlichkeitswert W größer als ein vorgegebener erster Schwellwert W1 ist oder nicht. Ist dies nicht der Fall, geht das Verfahren zum Schritt S4 über, in welchem bestätigt wird, dass die Ultraschallsensoren 3 nicht blockiert sind. Das Verfahren kehrt dann zum Schritt S1 zurück. Wird jedoch gemäß Schritt S3 erkannt, dass W größer W1, so wird gemäß Schritt S5 der oben genannte Detektionsalgorithmus - dieser basiert auf dem zumindest einen Schwingungsparameter - empfindlicher bzw. sensibler eingestellt. Dies bedeutet, dass der Grenzwert für den zumindest einen Schwingungsparameter derart verändert wird, dass eine Differenz zwischen diesem Grenzwert und einem Nominalwert bzw. Normalwert des Schwingungsparameters reduziert wird.

Das Verfahren geht dann zu einem weiteren Schritt S6 über, in welchem durch die Auswerteeinrichtung 4 überprüft wird, ob der Wahrscheinlichkeitswert W größer als ein vorgegebener zweiter Schwellwert W2 ist, wobei W2>W1. Ist dies nicht der Fall, kehrt das Verfahren über den Schritt S4 zum Schritt S1 zurück. Wird gemäß Schritt S6 detektiert, dass W>W2, so geht das Verfahren zu einem letzten Schritt S7 über, in welchem ein Warnsignal durch die Auswerteeinrichtung 4 ausgegeben wird, durch welches der blockierte Zustand und somit die Notwendigkeit einer Reinigung dem Fahrer signalisiert wird. Die Ausgabe des Warnsignals kann hier auch voraussetzen, dass der sensibler eingestellte Detektionsalgorithmus ebenfalls auf einen blockierten Zustand hindeutet, d.h. der Istwert des zumindest einen Schwingungsparameters den zugeordneten Schwellwert überschreitet bzw. unterschreitet.

## Patentansprüche

1. Verfahren zum Erkennen eines blockierten Zustands eines Ultraschallsensors (3) eines Kraftfahrzeugs (1), bei welchem ein aktueller Istwert zumindest eines Schwingungsparameters des Ultraschallsensors (3) erfasst und zum Erkennen des blockierten Zustands mittels einer Auswerteeinrichtung (4) mit zumindest einem Grenzwert verglichen wird, wobei als Istwert des zumindest einen Schwingungsparameters ein Istwert einer Resonanzfrequenz und/oder ein Istwert einer Ausschwingzeit des Ultraschallsensors (3) erfasst wird, wobei abhängig von einer Messgröße zumindest eines von dem Ultraschallsensor (3) verschiedenen Sensors (8 bis 14) ein Wahrscheinlichkeitswert (W) durch die Auswerteeinrichtung (4) bestimmt wird, welcher die aktuelle Wahrscheinlichkeit für den blockierten Zustand des Ultraschallsensors (3) angibt, und das Detektieren des blockierten Zustands zusätzlich unter Berücksichtigung des Wahrscheinlichkeitswerts (W) erfolgt,
**dadurch gekennzeichnet, dass**
das Berücksichtigen des Wahrscheinlichkeitswerts (W) umfasst, dass der Grenzwert abhängig von dem Wahrscheinlichkeitswert (W) festgelegt wird, wobei der Grenzwert derart festgelegt wird, dass eine Differenz zwischen dem Grenzwert einerseits und einem Nominalwert des Schwingungsparameters andererseits bei einem höheren Wahrscheinlichkeitswert (W) geringer als bei einem geringeren Wahrscheinlichkeitswert (W) eingestellt wird.

2. Verfahren nach einem der vorhergehenden Ansprüche,
**dadurch gekennzeichnet, dass**
der Wahrscheinlichkeitswert (W) mit zumindest einem vorbestimmten Schwellwert (W1, W2), verglichen wird und das Berücksichtigen des Wahrscheinlichkeitswerts (W) abhängig von einem Ergebnis dieses Vergleichs erfolgt.

3. Verfahren nach einem Anspruch 2,
**dadurch gekennzeichnet, dass**
der Wahrscheinlichkeitswert (W) mit einem ersten Schwellwert (W1) und einem gegenüber dem ersten Schwellwert (W1) höheren zweiten Schwellwert (W2) verglichen wird und das Berücksichtigen des Wahrscheinlichkeitswerts (W) abhängig von einem Ergebnis dieses Vergleichs erfolgt, falls der Wahrscheinlichkeitswert (W) den ersten Schwellwert (W1, W2) überschreitet, die Differenz von einem ersten Differenzwert auf einen geringeren zweiten Differenzwert reduziert wird, und dass
der blockierte Zustand des Ultraschallsensors (3) dann detektiert wird, wenn:
- der Wahrscheinlichkeitswert (W) den zweiten Schwellwert (W2) überschreitet und/oder
- der Istwert des zumindest einen Schwingungsparameters den Grenzwert erreicht.

4. Verfahren nach einem der vorhergehenden Ansprüche,
**dadurch gekennzeichnet, dass**
der Wahrscheinlichkeitswert (W) abhängig von zumindest einer Messgröße bestimmt wird, welche aktuelle atmosphärische Umgebungsbedingungen des Kraftfahrzeugs (1) charakterisiert, insbesondere abhängig von einer aktuellen Umgebungstemperatur und/oder abhängig von der Detektion eines Schneefalls und/oder Regens.

5. Verfahren nach einem der vorhergehenden Ansprüche,
**dadurch gekennzeichnet, dass**
der Wahrscheinlichkeitswert (W) abhängig von einer aktuellen Geschwindigkeit des Kraftfahrzeugs (1) als Messgröße bestimmt wird.

6. Verfahren nach einem der vorhergehenden Ansprüche,
**dadurch gekennzeichnet, dass**
der Wahrscheinlichkeitswert (W) abhängig von einer durch das Kraftfahrzeug (1) seit einem Referenzzeitpunkt zurückgelegten Wegstrecke als Messgröße bestimmt wird.

7. Verfahren nach einem der vorhergehenden Ansprüche,
**dadurch gekennzeichnet, dass**
der Wahrscheinlichkeitswert (W) abhängig von einem Zustand einer Fahrbahn als Messgröße bestimmt wird, welcher insbesondere anhand zumindest eines durch eine Kamera des Kraftfahrzeugs (1) bereitgestellten Bilds eines Umgebungsbereichs des Kraftfahrzeugs (1) ermittelt wird.

8. Verfahren nach einem der vorhergehenden Ansprüche,
**dadurch gekennzeichnet, dass**
der Wahrscheinlichkeitswert (W) abhängig von einem Abstand des Kraftfahrzeugs (1) von einem benachbarten Fahrzeug als Messgröße bestimmt wird.

9. Verfahren nach einem der vorhergehenden Ansprüche,
**dadurch gekennzeichnet, dass**
der Wahrscheinlichkeitswert (W) abhängig von einer aktuellen geographischen Position des Kraftfahrzeugs (1) als Messgröße bestimmt wird.

10. Verfahren nach einem der vorhergehenden Ansprüche,
**dadurch gekennzeichnet, dass**
der Wahrscheinlichkeitswert (W) abhängig von einer Position des Ultraschallsensors (3) an dem Kraftfahrzeug (1) bestimmt wird.

11. Verfahren nach einem der vorhergehenden Ansprüche, **dadurch gekennzeichnet, dass** der Wahrscheinlichkeitswert abhängig von zumindest zwei, insbesondere abhängig von zumindest drei, unterschiedlichen Messgrößen berechnet wird.

12. Ultraschallsensorvorrichtung (2) für ein Kraftfahrzeug (1), mit zumindest einem Ultraschallsensor (3) und mit einer Auswerteeinrichtung (4), welche dazu ausgelegt ist, einen Istwert zumindest eines Schwingungsparameters des Ultraschallsensors (3) zu erfassen, mit einem Grenzwert zu vergleichen und abhängig von dem Vergleich einen blockierten Zustand des Ultraschallsensors (3) zu erkennen, wobei als Istwert des zumindest einen Schwingungsparameters ein Istwert einer Resonanzfrequenz und/oder ein Istwert einer Ausschwingzeit des Ultraschallsensors (3) erfasst wird,
wobei die Auswerteeinrichtung (4) dazu ausgelegt ist, abhängig von einer Messgröße zumindest eines von dem Ultraschallsensor (3) verschiedenen Sensors (8 bis 14) einen Wahrscheinlichkeitswert (W) zu bestimmen, welcher die aktuelle Wahrscheinlichkeit für den blockierten Zustand des Ultraschallsensors (3) angibt, und bei der Detektion des blockierten Zustands zusätzlich den Wahrscheinlichkeitswert (W) zu berücksichtigen,
**dadurch gekennzeichnet, dass**
das Berücksichtigen des Wahrscheinlichkeitswerts (W) umfasst, dass der Grenzwert abhängig von dem Wahrscheinlichkeitswert (W) festgelegt wird,
wobei der Grenzwert derart festgelegt wird, dass eine Differenz zwischen dem Grenzwert einerseits und einem Nominalwert des Schwingungsparameters andererseits bei einem höheren Wahrscheinlichkeitswert (W) geringer als bei einem geringeren Wahrscheinlichkeitswert (W) eingestellt wird.

13. Kraftfahrzeug (1), insbesondere Personenkraftwagen, mit einer Ultraschallsensorvorrichtung (2) nach Anspruch 12.

## Claims

1. Method for detecting a blocked state of an ultrasonic sensor (3) of a motor vehicle (1), in which a current actual value of at least one oscillation parameter of the ultrasonic sensor (3) is recorded and, in order to detect the blocked state, is compared with at least one limit value by means of an evaluation device (4), wherein an actual value of a resonant frequency and/or an actual value of a decay time of the ultrasonic sensor (3) is/are recorded as the actual value of the at least one oscillation parameter, wherein a probability value (W) indicating the current probability of the blocked state of the ultrasonic sensor (3) is determined by the evaluation device (4) on the basis of a measurement variable of at least one sensor (8 to 14) that differs from the ultrasonic sensor (3), and the blocked state is additionally detected taking into account the probability value (W),
**characterized in that**
the process of taking the probability value (W) into account comprises determining the limit value on the basis of the probability value (W), wherein the limit value is determined in such a manner that a difference between the limit value, on the one hand, and a nominal value of the oscillation parameter, on the other hand, is set to be lower for a higher probability value (W) than for a lower probability value (W).

2. Method according to one of the preceding claims,
**characterized in that**
the probability value (W) is compared with at least one predetermined threshold value (W1, W2), and the probability value (W) is taken into account on the basis of a result of this comparison.

3. Method according to Claim 2,
**characterized in that**
the probability value (W) is compared with a first threshold value (W1) and a second threshold value (W2) that is higher than the first threshold value (W1), and the probability value (W) is taken into account on the basis of a result of this comparison, the difference is reduced from a first difference value to a lower, second difference value if the probability value (W) exceeds the first threshold value (W1, W2), and **in that**
the blocked state of the ultrasonic sensor (3) is detected when:
- the probability value (W) exceeds the second threshold value (W2), and/or
- the actual value of the at least one oscillation parameter reaches the limit value.

4. Method according to one of the preceding claims,
**characterized in that**
the probability value (W) is determined on the basis of at least one measurement variable which characterizes current atmospheric ambient conditions of the motor vehicle (1), in particular on the basis of a current ambient temperature and/or on the basis of the detection of snowfall and/or rain.

5. Method according to one of the preceding claims,
**characterized in that**
the probability value (W) is determined on the basis of a current speed of the motor vehicle (1) as a measurement variable.

6. Method according to one of the preceding claims,
**characterized in that**
the probability value (W) is determined on the basis of a distance covered by the motor vehicle (1) since a reference time as a measurement variable.

7. Method according to one of the preceding claims,
**characterized in that**
the probability value (W) is determined on the basis of a condition of a road as a measurement variable, which condition is determined, in particular, on the basis of at least one image of an area surrounding the motor vehicle (1), which image is provided by a camera of the motor vehicle (1).

8. Method according to one of the preceding claims,
**characterized in that**
the probability value (W) is determined on the basis of a distance between the motor vehicle (1) and an adjacent vehicle as a measurement variable.

9. Method according to one of the preceding claims,
**characterized in that**
the probability value (W) is determined on the basis of a current geographical position of the motor vehicle (1) as a measurement variable.

10. Method according to one of the preceding claims,
**characterized in that**
the probability value (W) is determined on the basis of a position of the ultrasonic sensor (3) on the motor vehicle (1).

11. Method according to one of the preceding claims, **characterized in that** the probability value is calculated on the basis of at least two, in particular at least three, different measurement variables.

12. Ultrasonic sensor apparatus (2) for a motor vehicle (1), having at least one ultrasonic sensor (3) and having an evaluation device (4), which is designed to record an actual value of at least one oscillation parameter of the ultrasonic sensor (3), to compare it with a limit value and to detect a blocked state of the ultrasonic sensor (3) on the basis of the comparison, wherein an actual value of a resonant frequency and/or an actual value of a decay time of the ultrasonic sensor (3) is/are recorded as the actual value of the at least one oscillation parameter,
wherein the evaluation device (4) is designed to determine a probability value (W) indicating the current probability of the blocked state of the ultrasonic sensor (3) on the basis of a measurement variable of at least one sensor (8 to 14) that differs from the ultrasonic sensor (3) and to additionally take the probability value (W) into account when detecting the blocked state,
**characterized in that**
the process of taking the probability value (W) into account comprises determining the limit value on the basis of the probability value (W), wherein the limit value is determined in such a manner that a difference between the limit value, on the one hand, and a nominal value of the oscillation parameter, on the other hand, is set to be lower for a higher probability value (W) than for a lower probability value (W).

13. Motor vehicle (1), in particular passenger car, having an ultrasonic sensor apparatus (2) according to Claim 12.

## Revendications

1. Procédé de détection d'un état bloqué d'un capteur à ultrasons (3) d'un véhicule automobile (1), procédé dans lequel une valeur réelle actuelle d'au moins un paramètre de vibration du capteur à ultrasons (3) est acquise et comparée à au moins une valeur limite au moyen d'une unité d'évaluation (4) pour détecter l'état bloqué, une valeur réelle d'une fréquence de résonance et/ou une valeur réelle d'un temps d'amortissement du capteur à ultrasons (3) étant acquises comme valeur réelle de l'au moins un paramètre de vibration, une valeur de probabilité (W), qui indique la probabilité actuelle de l'état bloqué du capteur à ultrasons (3), étant déterminée par l'unité d'évaluation (4), et l'état bloqué étant en outre détecté avec prise en compte de la valeur de probabilité (W), en fonction d'une grandeur de mesure d'au moins un capteur (8 à 14) différent du capteur à ultrasons (3),
**caractérisé en ce que**
la prise en compte de la valeur de probabilité (W) comprend la définition de la valeur limite en fonction de la valeur de probabilité (W),
la valeur limite étant définie de manière à régler une différence entre la valeur limite d'une part et une valeur nominale du paramètre de vibration d'autre part à une valeur plus faible pour une valeur de probabilité plus élevée (W) que pour une valeur de probabilité plus faible (W).

2. Procédé selon l'une des revendications précédentes,
**caractérisé en ce que**
la valeur de probabilité (W) est comparée à au moins une valeur seuil prédéterminée (W1, W2), et la prise en compte de la valeur de probabilité (W) est effectuée en fonction d'un résultat de cette comparaison.

3. Procédé selon la revendication 2,
**caractérisé en ce que**
la valeur de probabilité (W) est comparée à une première valeur seuil (W1) et à une deuxième valeur seuil (W2), qui est supérieure à la première valeur seuil (W1), et la prise en compte de la valeur de probabilité (W) est effectuée en fonction d'un résultat de cette comparaison si la valeur de probabilité (W) est supérieure à la première valeur seuil (W1, W2), la différence étant réduite d'une première valeur de différence à une deuxième valeur de différence plus faible, et
l'état bloqué du capteur à ultrasons (3) est détecté lorsque :
- la valeur de probabilité (W) est supérieure à la deuxième valeur seuil (W2) et/ou
- la valeur réelle de l'au moins un paramètre de vibration atteint la valeur limite.

4. Procédé selon l'une des revendications précédentes,
**caractérisé en ce que**
la valeur de probabilité (W) est déterminée en fonction d'au moins une grandeur de mesure qui caractérise des conditions d'environnement atmosphériques actuelles du véhicule automobile (1), notamment en fonction d'une température d'environnement actuelle et/ou en fonction de la détection de chute de neige et/ou de pluie.

5. Procédé selon l'une des revendications précédentes,
**caractérisé en ce que**
la valeur de probabilité (W) est déterminée comme grandeur de mesure en fonction d'une vitesse actuelle du véhicule automobile (1).

6. Procédé selon l'une des revendications précédentes,
**caractérisé en ce que**
la valeur de probabilité (W) est déterminée comme grandeur de mesure en fonction d'une distance parcourue par le véhicule automobile (1) à partir d'un instant de référence.

7. Procédé selon l'une des revendications précédentes,
**caractérisé en ce que**
la valeur de probabilité (W) est déterminée comme grandeur de mesure en fonction d'un état d'une chaussée qui est déterminé notamment à l'aide d'au moins une image d'une zone d'environnement du véhicule automobile (1) qui est fournie par une caméra du véhicule automobile (1).

8. Procédé selon l'une des revendications précédentes,
**caractérisé en ce que**
la valeur de probabilité (W) est déterminée comme grandeur de mesure en fonction d'une distance du véhicule automobile (1) par rapport à un véhicule voisin.

9. Procédé selon l'une des revendications précédentes,
**caractérisé en ce que**
la valeur de probabilité (W) est déterminée comme grandeur de mesure en fonction d'une position géographique actuelle du véhicule automobile (1).

10. Procédé selon l'une des revendications précédentes,
**caractérisé en ce que**
la valeur de probabilité (W) est déterminée en fonction d'une position du capteur à ultrasons (3) situé sur le véhicule automobile (1).

11. Procédé selon l'une des revendications précédentes, **caractérisé en ce que** la valeur de probabilité est calculée en fonction d'au moins deux, notamment en fonction d'au moins trois, grandeurs de mesure différentes.

12. Dispositif à capteurs à ultrasons (2) destiné à un véhicule automobile (1), ledit dispositif comprenant au moins un capteur à ultrasons (3) et une unité d'évaluation (4) qui est conçue pour détecter une valeur réelle d'au moins un paramètre de vibration du capteur à ultrasons (3), la comparer à une valeur limite et détecter un état bloqué du capteur à ultrasons (3) en fonction de la comparaison, une valeur réelle d'une fréquence de résonance et/ou une valeur réelle d'un temps d'amortissement du capteur à ultrasons (3) étant acquises comme valeur réelle de l'au moins un paramètre de vibration,
l'unité d'évaluation (4) étant conçue pour déterminer en fonction d'une grandeur de mesure d'au moins un capteur (8 à 14), différent du capteur à ultrasons (3), une valeur de probabilité (W) qui indique la probabilité actuelle de l'état bloqué du capteur à ultrasons (3), et pour prendre en compte en outre la valeur de probabilité (W) lors de la détection de l'état bloqué,
**caractérisé en ce que**
la prise en compte de la valeur de probabilité (W) comprend la définition de la valeur limite en fonction de la valeur de probabilité (W),
la valeur limite étant définie de manière à régler une différence entre la valeur limite d'une part et une valeur nominale du paramètre de vibration d'autre part à une valeur plus faible pour une valeur de probabilité plus élevée (W) que pour une valeur de probabilité plus faible (W).

13. Véhicule automobile (1), notamment voiture de tourisme, comprenant un dispositif à capteurs à ultrasons (2) selon la revendication 12.
